(19) Europäisches Patentamt
European Patent Office
Office européen des brevets

(11) EP 1 533 859 A2

(12) **EUROPEAN PATENT APPLICATION**

(43) Date of publication:
**25.05.2005 Bulletin 2005/21**

(51) Int Cl.[7]: **H01M 8/04**, H01M 8/10

(21) Application number: **04025958.2**

(22) Date of filing: **02.11.2004**

(84) Designated Contracting States:
**AT BE BG CH CY CZ DE DK EE ES FI FR GB GR HU IE IS IT LI LU MC NL PL PT RO SE SI SK TR**
Designated Extension States:
**AL HR LT LV MK YU**

(30) Priority: **06.11.2003 JP 2003377279**

(71) Applicant: **MATSUSHITA ELECTRIC INDUSTRIAL CO., LTD.**
**Kadoma-shi, Osaka 571-8501 (JP)**

(72) Inventors:
- **Unoki, Shigeyuki**
**Katano-shi Osaka 576-0036 (JP)**
- **Kanbara, Teruhisa**
**Toyonaka-shi Osaka 560-0056 (JP)**
- **Yasumoto, Eiichi**
**Sorakugun Koyto 619-0238 (JP)**
- **Gyoten, Hisaaki**
**Shizyounawate-shi Osaka 570-0013 (JP)**
- **Takebe, Yasuo**
**Uji-shi Kyoto 611-0002 (JP)**
- **Seki, Yasuhiro**
**Hirakata-shi Osaka 573-1146 (JP)**

(74) Representative: **Jung HML Pantentanwälte**
**Schraudolphstrasse 3**
**80799 München (DE)**

(54) **Diffusion layer for a fuel cell**

(57) A fuel cell includes an electrolyte membrane, a pair of anode-side and cathode-side catalyst layers, a pair of an anode gas diffusion layer and a cathode gas diffusion layer, and a pair of an anode-side separator and a cathode-side separator. Also adjusted in the fuel cell is at least one of a fine pore diameter and a content of a water repellent agent in the anode gas diffusion layer and the cathode gas diffusion layer, so as to satisfy the following equation (1):

$$-0.07 \leq (Ya-Xa) / ((Ya-Xa) + (Yc-Xc)) \leq 0.15 \quad (1)$$

wherein Xa represents a water feeding amount in the fuel gas thus fed, Ya represents a water discharging amount in the discharged fuel gas, Xc represents a water feeding amount in the oxidizing gas thus fed, and Yc represents a water discharging amount in the discharged oxidizing gas.

**Fig.2 A**

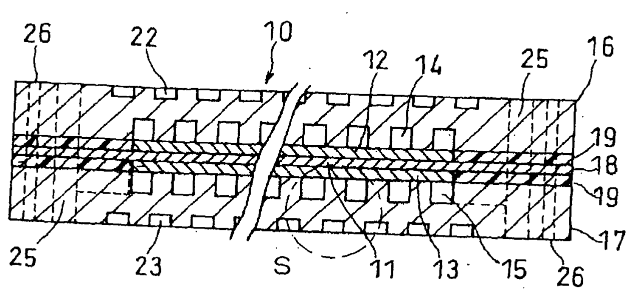


EP 1 533 859 A2

## Description

## BACKGROUND OF THE INVENTION

### Field of the Invention

The present invention relates to a fuel cell and a fuel cell system that are excellent in output voltage stability and causes no flooding even under low power operation and low flow rates of feeding gases, and are used in a household co-generation system, a motorcycle, an electric automobile and a hybrid electric automobile and the like.

### Related Art of the Invention

A fuel cell using a hydrogen ion conductive polymer electrolyte membrane (hereinafter, referred to as an electrolyte membrane) simultaneously generates electric power and heat through electrochemical reaction between a fuel gas containing hydrogen and an oxidizing gas containing oxygen, such as air. The fuel cell basically contains an electrolyte membrane selectively transporting a hydrogen ion, and a pair of electrodes disposed on both surfaces of the electrolyte membrane.

The electrode each is constituted by a catalyst layer mainly containing electroconductive carbon powder carrying a platinum group metal catalyst, andgas diffusion layers having both air permeability and electron conductivity formed on outer surfaces of the catalyst layers. The gas diffusion layer contains, for example, carbon paper having been subjected to a water repellent treatment. The assembly is referred to as an MEA (electrolyte membrane-electrode assembly). In the invention, carbon paper having not been subjected to a water repellent treatment is referred to as a substrate, and the substrate having a water repellent layer coated thereon is referred to as a gas diffusion layer, which inclusively designates both the coated layer and the substrate.

Electroconductive separator plates are disposed on the outer surfaces of the MEA for mechanically fixing the MEA and for electrically connecting the adjacent MEAs in series with each other. The separator plate has, on the part in contact with the MEA, a gas flow channel for feeding a reaction gas to the surface of the electrode and for discharging generated water and an excessive gas therefrom. The gas flow channel may be provided separately from the separator plate, but in general, a groove is provided on the surface of the separator plate to constitute the gas flow channel.

The MEAs and the separator plates are alternately accumulated, and after accumulating in 10 to 200 cells, the assembly is sandwiched by terminal plates through a collector plate and an insulatingplate, followedby fixingwith fastening bolts from both ends thereof, to constitute a general structure of a stacked cell. The structure is referred to as a cell stack.

The electrolyte membrane is decreased in specific resistance of the membrane upon containing water to function as a hydrogen ion conductive electrolyte. Therefore, upon operation of the fuel cell, the fuel gas and the oxidizing gas are fed with humidification for preventing the electrolyte membrane from being dried. Upon electric power generation of the cell, water is formed on the cathode side as a reaction product of the following electrochemical reaction as Chemical Formula 1.

[Chemical Formula 1]

$$\text{Anode:} \quad H_2 \text{ -> } 2H^+ + 2e^-$$

$$\text{Cathode:} \quad 2H^+ + (1/2)O_2 + 2e^- \text{ -> } H_2O$$

Furthermore, protons formed at the anode migrate to the cathode with water. Moreover, back diffusion water flows from the cathode side to the anode side penetrating the electrolyte membrane, through the driving force caused by the difference in hydraulic pressure between the cathode side and the anode side of the electrolyte membrane.

These kinds of water, i.e. , the water in the humidified fuel gas, the water in the humidified oxidizing gas, the water as the reaction product, the water associated with protons and the back diffusion water, are used for maintaining the electrolyte membrane in a saturated state and discharged to the exterior of the fuel cell along with the excessive fuel gas and the excessive oxidizing gas.

Accordingly, the water discharge amount (Ya) in the discharged fuel gas and the water discharge amount (Yc) in the discharged oxidizing gas can be expressed by the following equations (4) and (5):

$$Ya = Xa - P + Q \quad (4)$$

$$Yc = Xc + P - Q + R \quad (5)$$

wherein Xa represents the water feeding amount in the humidified fuel gas, Ya represents the water discharge amount in the discharged fuel gas, Xc represents the water feeding amount in the humidified oxidizing gas, Yc represents the water discharge amount in the discharged oxidizing gas, R represents the amount of the water as the reaction product, P represents the amount of the water as sociated with protons , and Q represents the amount of the back diffusion water.

It is understood from the equations (4) and (5) that the water amount (Ya) in the discharged fuel gas is increased in the difference between the amount of the back diffusion water Q and the amount of the water associated with protons P with respect to the water amount (Xa) in the fed fuel gas, and the water amount (Yc) in the discharged oxidizing gas is increased in such a value obtained by adding the amount of the water as the reaction product R to the difference between the amount of the water associated with protons P and the amount of the back diffusion water Q with respect to the water amount (Ya) in the fed oxidizing gas.

The amount of the water associated with protons P is determined by the proton migration amount upon electric power generation of the cell, and the amount of the water as the reaction product R is determined by the conditions of electric power generation (e.g., the current density). Therefore, assuming that the amount of the electricity thus generated is constant, the increase and decrease of the water amount in the discharged gas are determined by the amount of the back diffusion water Q, i.e., determined by the difference in hydraulic pressure between the cathode side and the anode side of the electrolyte membrane.

The difference in hydraulic pressure between the cathode side and the anode side of the electrolyte membrane is influenced by the balance in withstand hydraulic pressure between the gas diffusion layers on the anode side and the cathode side.

Fig. 1 is an enlarged surface view of an ordinary gas diffusion layer substrate. The governing factors determining the withstand hydraulic pressure include the water repellent property of the gas diffusion layer substrate formed with carbon fibers 1, the pores 2 surrounded by the carbon fibers 1, the gas permeability of the carbon fibers 1, and the water repellent property of the coated layer formed on the carbon fibers 1.

The water repellent properties of the substrate, i . e . , the carbon fibers 1, and the coated layer are determined by the water repellent treatment using, for example, PTFE, and are generally about 30 mN/m. There is such a tendency that the water is liable to be discharged when the pore diameter of the substrate is larger, which is about from 20 to 100 μm for a woven cloth and is about from 10 to 30 μm for a non-woven cloth.

Therefore, it is understood that a woven cloth has a smaller withstand hydraulic pressure than a non-woven cloth. There is such a tendency that water is liable to be discharged when the gas permeability is larger. The gas permeability is largely influenced by the material for the substrate and is about from $10^{-7}$ to $10^{-6}$ $m \cdot m^3/m^2 \cdot s \cdot Pa$ for a woven cloth and is about from $10^{-9}$ to $10^{-7}$ $m \cdot m^3/m^2 \cdot s \cdot Pa$ for a non-woven cloth. Therefore, it is understood that a woven cloth has a smaller withstand hydraulic pressure than a non-woven cloth.

The withstand hydraulic pressure of the gas diffusion layer herein means such a pressure that is necessary for water invading and penetrating the gas diffusion layer saturated with a gas, and can be measured according to JIS L1092, Test Method for Waterproof Property of Textile Product, in which a test piece is attached to a water resistance test machine in such a manner that the test piece is in contact with water, a leveling device having water filled therein is raised to elevate the water level to apply a hydraulic pressure to the test piece, and the withstand hydraulic pressure is measured in terms of the water level when water is discharged from the back surface of the test piece.

The water in liquid state contained in the discharged gas is attached as liquid droplets through surface tension to the grooves constituting the gas flow channel on the separator plate. The attached liquid droplets are difficult to migrate within the gas flow channel, and in a severe case, the water attached to the inner surface of the gas flow channel clogs the gas flow channel to impair the gas flow, whereby the flooding phenomenon occurs. As a result, the reaction area of the electrode is reduced to lower the cell performance. Accordingly, such a situation occurs that flocculated water inside the gas flow channel is difficult to migrate, which brings about repetition of the following sequence, i.e., the flocculated water with an increasing amount clogs the gas flow channel, the flocculated water is discharged through the pressure of the gas flow, and then flocculated water is again attached to the gas flow channel.

Therefore, in the case where the flocculated water inside the gas flow channel is difficult to migrate, such problems occur that the fed amount of the reaction gas is short, and the flow rates become uneven among the gas flow channels, whereby the cell characteristics are deteriorated.

As a means of suppressing the flooding to stabilize the output voltage, such a method has been conventionally proposed that the temperature distribution within the cell surface is controlled in such a manner that the water vapor pressure distribution of the oxidizing gas and the saturated water vapor pressure distribution on the reaction part of

the catalyst layer are in an equilibrium state by adjusting the temperature and the flow rate of the cooling medium, so as to prevent the generated water frombeing condensed (as described, for example, in JP-A-8-111230).

In the aforementioned conventional method, however, in the case where the output power is fluctuated to deviate the equilibrium state of the water vapor pressure distribution of the oxidizing gas and the saturated water vapor pressure distribution on the reaction part of the catalyst layer, it is difficult to follow the equilibrium state due to the utilization of control with the temperature and the flow rate of the cooling medium. Therefore, the conventional method is restricted in operation conditions of the system, and a high efficiency operation cannot be always attained.

Under consideration of the problems associated with the conventional techniques, an object of the invention is to provide such a fuel cell and a fuel cell system that are less restricted in operation conditions of the system, and can suppress flooding from occurring, so as to realize a stable output voltage.

## SUMMARY OF THE INVENTION

The invention is based on the following phenomena.

The oxidizing gas side and the fuel gas side are different from each other in force for discharging flocculated water to the outside. The discharge of the flocculated water is ef fectedby the pressure of the gas flow as havingbeen described. Air having an oxygen content of about 20% is generally used as the oxidizing gas, and therefore, about 80% of the fed amount of the remaining gas is present in the vicinity of the outlet of the gas flow channel of the oxidizing gas. Accordingly, it is considered that the pressure of the oxidizing gas flow is relatively large.

On the other hand, a hydrogen gas or a reformed gas having a hydrogen content of from 70 to 90% is used as the fuel gas, and therefore, the amount of the remaining gas in the vicinity of the outlet of the gas flow channel of the fuel gas is small. Accordingly, it is considered that the pressure of the fuel gas flow is relatively small.

Consequently, it is considered that the force for discharging flocculated water on the fuel gas outlet is smaller than the force for discharging flocculated water on the oxidizing gas outlet.

In order to suppress flooding from occurring to realize a stable output voltage, under the condition where the amount of the flocculated water is increased, it is considered that the degree of increasing the flocculated water on the oxidizing gas side is preferably larger than the degree of increasing the flocculated water on the fuel gas side. In this case, in turn, the amount of back diffusion water Q migrating from the oxidizing gas side to the fuel gas side is suppressed.

The aforementioned situation, where the degree of increasing the flocculated water on the oxidizing gas side is larger than the degree of increasing the flocculated water on the fuel gas side, is not the essential condition, but there are some cases where the object of the invention is attained, i.e., the flooding is suppressed from occurring to realize a stable output voltage, even under the reverse condition, depending on the other conditions as demonstrated by the examples and the comparative examples described later.

In order to attain the object of the invention, a first aspect of the invention is a fuel cell comprising an electrolyte membrane, a pair of anode-side and cathode-side catalyst layers being disposed on both sides of the electrolyte membrane, a pair of an anode gas diffusion layer and a cathode gas diffusion layer being disposed to hold the pair of catalyst layers from outside, an anode-side separator having fuel gas flow channels for feeding and discharging a fuel gas containing hydrogen to the anode gas diffusion layer, and a cathode-side separator having oxidizing gas flow channels for feeding and discharging an oxidizing gas to the cathode gas diffusion layer, the anode-side separator and the cathode-side separator being disposed to hold the pair of diffusion layers,

the anode gas diffusion layer and the cathode gas diffusion layer being adjusted in such a manner that at least one of a fine pore diameter and a content of a water repellent agent satisfies the following equation (1):

$$-0.07 \leq (Ya-Xa) / ((Ya-Xa) + (Yc-Xc)) \leq 0.15 \qquad (1)$$

wherein Xa represents a water feeding amount in the fuel gas thus fed, Ya represents a water discharging amount in the discharged fuel gas, Xc represents a water feeding amount in the oxidizing gas thus fed, andYc represents awater discharging amount in the discharged oxidizing gas..

By satisfying the equation (1), the amount of back diffusion water to the anode side is suppressed, and the flooding phenomenon due to the small force for discharging the flocculated water in the vicinity of the outlet of the fuel gas flow channel can be suppressed.

Although the amount of the flocculated water is increased on the cathode side, the liquid droplets smoothly migrate in the gas flow channel owing to the large force for discharging the flocculated water on this side to suppress the flooding phenomenon.

It is expected that the reason why the lower limit is -0.07 is that even though the water can increase, in the case where the water content of the oxidizing gas is too large, the flocculated water cannot completely be discharged

and flooding is caused.

A second aspect of the invention is the fuel cell as claimed in the first aspect of the invention, wherein the electrolyte membrane is adjusted in thickness to satisfy the equation (1).

The migration resistance of water within the electrolyte membrane is increased with increasing the thickness of the electrolyte membrane. Therefore, the thickness of the electrolyte membrane is preferably adjusted to satisfy the equation (1) to suppress flooding through the same mechanism as in the first aspect of the invention.

A third aspect of the invention is the fuel cell as claimed in the first or the second aspects of the invention, wherein the gas flow channels of the anode-side separator and the gas flow channels of the cathode-side separator have structures that are adjusted to satisfy the following equation (2):

$$a \leq b2 \text{ and } b1 \leq b2 \text{ and } c \leq b2 \qquad (2)$$

wherein "a" represents a groove depth of the gas flow channels, "b1" represents a bottom width of the groove of the gas flow channels, "b2" represents a top width of the groove of the gas flow channels, and "c" represents a width of a mound between the plural gas flow channels.

By satisfying the equation (2) , the drainage property of the separator can be improved to facilitate attainment of the first and second aspects of the invention.

A fourth aspect of the invention is a fuel cell comprising an electrolyte membrane, a pair of anode-side and cathode-side catalyst layers being disposed on both sides of the electrolyte membrane, a pair of an anode gas diffusion layer and a cathode gas diffusion layer being disposed to hold the pair of catalyst layers from outside, an anode-side separator having fuel gas flow channels for feeding and discharging a fuel gas containing hydrogen to the anode gas diffusion layer, and a cathode-side separator having oxidizing gas flow channels for feeding and discharging an oxidizing gas to the cathode gas diffusion layer, the anode-side separator and the cathode-side separator being disposed to hold the pair of diffusion layers,

the anode gas diffusion layer and the cathode gas diffusion layer being adjusted in such a manner that at least one of a fine pore diameter and a content of a water repellent agent satisfies the following equation (3):

$$-0.50 \text{ kPa} \leq (Ec - Ea) \leq 1.00 \text{ kPa} \qquad (3)$$

wherein Ea represents a hydraulic pressure between the anode gas diffusion layer and the electrolyte membrane, and Ec represents a hydraulic pressure between the cathode gas diffusion layer and the electrolyte membrane.

In the case where the value (Ec - Ea) is lower than the lower limit in the equation (3) , the hydraulic pressure applied to the cathode side of the electrolyte membrane becomes lower than the hydraulic pressure applied to the anode side thereof to cause substantially no back diffusion water Q. It is considered therefore that the substantially whole amount of the water as the reaction product R is discharged to the oxidiz ing gas outlet to cause flooding due to shortage in discharge capability for the too large amount of flocculated water.

In the case where the value (Ec - Ea) exceeds the upper limit of the equation (3) , on the other hand, the hydraulic pressure applied to the cathode side of the electrolyte membrane becomes higher than the hydraulic pressure applied to the anode side thereof to increase the amount of the back diffusion water Q. It is considered therefore that the amount of the flocculated water on the fuel gas outlet side is increased to cause shortage in discharge capability, and the amount of the flocculated water on the oxidizing gas outlet side is decreased to cause shortage in discharge capability due to decrease in mobility of the liquid droplets, so as to bring about flooding.

According to a fifth aspect of the invention, such a fuel cell system is provided that feeds humidified gases in a manner satisfying the equation (1).

By controlling the humidifying amounts of the fed gases to satisfy the equation (1) , the amount of the back diffusion water to the anode side is suppressed, and the remaining gas amount in the vicinity of the outlet of the fuel gas flow channel is reduced, whereby such a fuel cell system can be realized that can suppress flooding caused by shortage in discharge capability of flocculated water. Furthermore, the amount of the flocculated water on the cathode side is increased to improve the wettability in the gas flow channel, whereby such a fuel cell system can be realized that can suppress flooding owing to the improved mobility of the liquid droplets in the gas flow channel.

According to a sixth aspect of the invention, such a fuel cell system is provided that feeds humidified gases in a manner satisfying the equation (3).

In the case where the humidifying amounts of the fed gases are controlled to be less than the lower limit of the equation (3), the hydraulic pressure applied to the cathode side of the electrolyte membrane becomes lower than the hydraulic pressure applied to the anode side thereof to cause substantially no back diffusion water Q, and the substantially whole amount of the water as the reaction product R is discharged to the oxidizing gas outlet to cause

shortage in discharge capability for the too large amount of flocculated water, so as to bring about a fuel cell system suffering flooding.

In the case where the humidifying amounts of the fed gases are controlled to exceed the upper limit of the equation (3) , on the other hand, the hydraulic pressure applied to the cathode side of the electrolyte membrane becomes higher than the hydraulic pressure applied to the anode side thereof to increase the amount of the back diffusion water Q, and the amount of the flocculated water on the fuel gas outlet side is increased to cause shortage in discharge capability, and the amount of the flocculated water on the oxidizing gas outlet side is decreased to cause shortage in discharge capability due to decrease in mobility of the liquid droplets, so as to bring about a fuel cell system suffering flooding.

According to the invention, such a fuel cell and a fuel cell system are provided that can suppress flooding from occurring to realize a stable output voltage.

## BRIEF DESCRIPTION OF THE DRAWINGS

Fig. 1 is an enlarged surface view of an ordinary gas diffusion layer woven cloth substrate.

Fig. 2A is a transversal cross sectional view showing a single cell constituting a fuel cell of Embodiment 1 of the invention, and Fig. 2B is a cross sectional view of the gas feeding channel of the electroconductive separator of the fuel cell according to Embodiment 1 of the invention, in a direction perpendicular to the gas flowing direction.

Fig. 3A is a cross sectional view showing a gas feeding channel of an electroconductive separator plate of a fuel cell used in Example 1 of the invention in a direction perpendicular to the gas flowing direction, Fig. 3B is a cross sectional view showing a gas feeding channel of an electroconductive separator plate of a fuel cell used in Example 5 of the invention in a direction perpendicular to the gas flowing direction, Fig. 3C is a cross sectional view showing a gas feeding channel of an electroconductive separator plate of a fuel cell used in Comparative Example 5 of the invention in a direction perpendicular to the gas flowing direction, Fig. 3D is a cross sectional view showing a gas feeding channel of an electroconductive separator plate of a fuel cell used in Comparative Example 6 of the invention in a direction perpendicular to the gas flowing direction, and Fig. 3E is a cross sectional view showing a gas feeding channel of an electroconductive separator plate of a fuel cell used in Comparative Example 7 of the invention in a direction perpendicular to the gas flowing direction.

Fig. 4 is a graph showing voltage stability upon operation of the fuel cells of Example 1 of the invention and Comparative Example 1 with high fuel utilization factor at cathode-side.

Fig. 5 is a graph showing voltage stability upon operation of the fuel cells of Example 2 of the invention and Comparative Example 2 with high fuel utilization factor at cathode-side.

Fig. 6 is a graph showing voltage stability upon operation of the fuel cells of Example 3 of the invention and Comparative Example 3 with high fuel utilization factor at cathode-side.

Fig. 7 is a graph showing voltage stability upon operation of the fuel cells of Example 4 of the invention and Comparative Example 4 with high fuel utilization factor at cathode-side.

Fig. 8 is a graph showing voltage stability upon operation of the fuel cells of Examples 3 and 5 of the invention and Comparative Examples 5 to 7 with high fuel utilization factor at cathode-side.

Fig. 9 is a constitutional diagram showing an example of a fuel cell system according to the invention.

### Description of Symbols

| | |
|---|---|
| 1 | carbon fibers |
| 2 | pores |
| 10 | single cell |
| 11 | proton conductive polymer electrolyte membrane |
| 12 | cathode gas diffusion layer |
| 13 | anode gas diffusion layer |
| 14 | oxidizing gas flow channel |
| 15 | fuel gas flow channel |
| 16 | cathode-side electroconductive separator plate |
| 17 | anode-side electroconductive separator plate |
| 18 | MEA |
| 19 | gasket |

22, 23 cooling water flow channel
25 manifold hole of fuel gas
26 hole for fastening bolt
30 fuel cell
31 fuel gas feeding device
32 oxidizing gas feeding device

**PREFERRED EMBODIMENTS OF THE INVENTION**

Embodiments of the invention will be described in detail with reference to the drawings.

(Embodiment 1)

Fig. 2A is a transversal cross sectional view showing a single cell constituting a fuel cell of Embodiment 1. As shown in Fig. 2A, a single cell 10 according to Embodiment 1 has an electrolyte membrane 11 as an example of the electrolyte membrane of the invention, and a pair of an anode-side catalyst layer as an example of the fuel gas-side catalyst layer of the invention and a cathode-side catalyst layer as an example of the oxidizing gas-side catalyst layer of the invention formed on both surfaces of the electrolyte membrane 11 (the thickness of the catalyst layers is not shown in the figures). The electrolyte membrane 11 is formed with a perfluorosulfonic acid represented by the following Chemical Formula 2, and the electrode catalyst is formed with Pt-carrying carbon.

An anode gas diffusion layer 13 as an example of the fuel gas diffusion layer of the invention and a cathode gas diffusion layer 12 as an example of the oxidizing gas diffusion layer of the invention are provided to hold the pair of the catalyst layers from outside. The electrolyte membrane 11, the pair of catalyst layers, the anode gas diffusion layer 13 and the cathode gas diffusion layer 12 are inclusively referred to as an MEA 18.

[Chemical Formula 2]

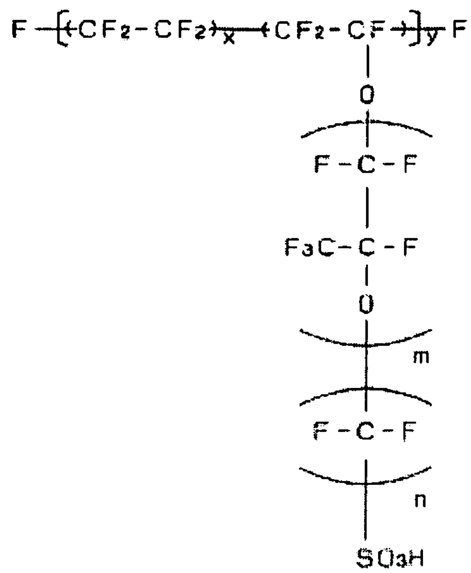

wherein $5 \leq x \leq 13.5$, $y = 1{,}000$, $m = 1$, and $n = 2$.

A cathode-side electroconductive separator plate 16 having an oxidizing gas flow channel 14 for feeding an oxidizing gas to the cathode gas diffusion layer 12 is provided in contact with the cathode gas diffusion layer 12. Similarly, an anode-side electroconductive separator plate 17 having a fuel gas flow channel 15 for feeding a fuel gas

to the anode gas diffusion layer 13 is provided in contact with the anode gas diffusion layer 13.

Gaskets 19 are provided between the respective separator plates 17 and 16 and the electrolyte membrane 11 and around the gas diffusion electrodes 12 and 13.

The single cells 10 each having the aforementioned constitution are stacked in 30 pieces to provide a cell stack. The cell stack is sandwiched by terminal plates through a collector plate and an insulating plate, followed by fixing with fastening bolts, to constitute a fuel cell.

The separator of the fuel cell according to Embodiment 1 of the invention will be described. Fig. 2B is a cross sectional view of the gas feeding channel of the electroconductive separator of the fuel cell according to Embodiment 1, in a direction perpendicular to the gas flowing direction. Fig. 2B is an enlarged view of the part S surrounded with the broken line in Fig. 2A. In Embodiment 1, the cathode-side electroconductive separator plate 16 and the anode-side electroconductive separator plate 17 have the same shape.

As shown in Fig. 2B, the oxidizing gas flow channel 14 and the fuel gas flow channel 15 have a groove depth represented by a, a bottom width represented by b1, a top width, i.e., a groove width at the surface of the separator plate , represented by b2, and a width of a mound between the adjacent gas flow channels represented by c. The shapes of the grooves on the separator plates 16 and 17 are constituted in such a manner that these lengths satisfy the equation (2):

$$a \leq b2 \text{ and } b1 \leq b2 \text{ and } c \leq b2 \qquad (2)$$

By satisfying the equation (2), the separator has well balanced groove width and depth to provide good drainage property.

As described in the Related Art of the Invention, in the fuel cell of Embodiment 1, the thickness of the electrolyte membrane 11 and the pore diameter and the content of a water repellent agent of the cathode gas diffusion layer 12 and the anode gas diffusion layer 13 are determined in such a manner that water contents as described below satisfy the equation (1) :

$$-0.07 \leq (Ya-Xa) / ((Ya-Xa) + (Yc-Xc)) \leq 0.15 \qquad (1)$$

wherein Xa represents a water feeding amount in the humidified fuel gas, Ya represents a water discharging amount in the discharged fuel gas, Xc represents a water feeding amount in the humidified oxidizing gas, and Yc represents a water discharging amount in the discharged oxidizing gas.

The water discharge amount (Ya) in the discharged fuel gas and the water discharge amount (Yc) in the discharged oxidizing gas can be determined by the equations (4) and (5) :

$$Ya = Xa - P + Q \qquad (4)$$

$$Yc = Xc + P - Q + R \qquad (5)$$

wherein R represents the amount of the water as the reaction product, P represents the amount of the water associated with protons, and Q represents the amount of the back diffusion water.

The amount of the water associated with protons P is determined by the proton migration amount upon electric power generation of the cell, and the amount of the water as the reaction product R is determined by the conditions of electric power generation (e.g., the current density) . Therefore, the increase and decrease of the water amount in the discharged gas are determined by the amount of the back diffusion water Q.

The amount of the back diffusion water Q is determined by the following equation (6):

$$Q = Rm \cdot \Delta P \qquad (6)$$

wherein Rm represents the migration resistance of water within the electrolyte membrane, and $\Delta P$ represents the difference in pressure applied to the electrolyte membrane.

Accordingly, the amount of the back diffusion water Q is determined by the difference $\Delta P$ between the hydraulic pressure applied to the cathode side of the electrolyte membrane and the hydraulic pressure applied to the anode side thereof.

The factor that determines $\Delta P$ is the balance in withstand hydraulic pressure between the gas diffusion layers on the anode side and the cathode side. The withstand hydraulic pressure E of the gas diffusion layer is determined by the following equation (7) based on the pressure difference of meniscus:

$$E = (2\gamma\cos\theta)/r \quad (7)$$

wherein $\gamma$ represents the surface tension, $\theta$ represents the contact angle, and r represents the pore diameter.
Therefore, the withstand hydraulic pressure E of the gas diffusion layer can be determined by controlling the pore diameter r of the substrate of the gas diffusion layer and the contact angle $\theta$ with the content of the water repellent agent in the substrate and the content of the water repellent agent in the coated layer formed on the substrate. In the fuel cell according to Embodiment 1, the thickness of the electrolyte membrane 11, and the pore diameter and the content of the water repellent agent in the cathode gas diffusion layer 12 and the anode gas diffusion layer 13 are determined in such a manner that the difference in hydraulic pressure (Ec - Ea) , wherein Ea represents the hydraulic pressure between the anode gas diffusion layer and the electrolyte membrane, and Ec represents a hydraulic pressure between the cathode gas diffusion layer and the electrolyte membrane, satisfies the equation (3):

$$-0.50\ \text{kPa} \le (Ec - Ea) \le 1.00\ \text{kPa} \quad (3)$$

[Example]

The fuel cell according to Embodiment 1 of the invention having the aforementioned constitution will be described with reference to the following examples, but the invention is not construed as being limited thereto.

(Example 1)

Fig. 3A is a cross sectional view showing a gas feeding channel of an electroconductive separator plate used in Example 1 in a direction perpendicular to the gas flowing direction. In Fig. 3A, the depth a of the gas feeding channel was 1.0 mm, the bottom width b1 of the gas feeding channel was 1.0 mm, the top width b2 of the gas feeding channel was 1.0 mm, and the mound width c was 1.0 mm.
The electrolyte membrane 11 of the MEA used in Example 1 was a Gore Select II membrane, produced by Japan Gore-Tex Co., Ltd. (thickness: 30 μm).
The gas diffusion layers of the MEA used in Example 1 were produced in the following manner.
A carbon woven cloth (GF-20-E, produced by Nippon Carbon Co. , Ltd. ) , of which 80% or more of pores have a diameter of 20 to 70 μm, was used as the substrate for the anode gas diffusion layer 13. The carbon woven cloth was immersed in a PTFE dispersion liquid containing PTFE dispersed in pure water containing a surfactant and then baked at 300°C for 60 minutes in a far infrared drying furnace. The amount of the water repellent resin (PTFE) in the substrate was 1.0 mg/cm$^2$. A coating composition for forming a coated layer was then produced. Carbon black was added to a solution obtained by mixing pure water and a surfactant, and then the solution was dispersed for 3 hours in a planetary mixer. PTFE and water were added to the resulting solution, followed by kneading for further 3 hours.
The surfactant used in Example 1 was commercially available under the name Triton X-100. The coating composition for forming the coated layer thus produced was coated on one surface of the carbon woven cloth having been subjected to the water repellent treatment by using an applicator. The carbon woven cloth having the coated layer formed thereon was baked at 300°C for 2 hours in a hot air dryer. The coated layer of the anode gas diffusion layer thus formed contained the water repellent resin (PTFE) in an amount of 0.8 mg/cm$^2$.
The cathode gas diffusion layer 12 was produced in the same manner as in the production of the anode gas diffusion layer 13 except that the amount of the water repellent resin (PTFE) in the coated layer was 0.4 mg/cm$^2$.
A fuel cell having such constitution as Embodiment 1 was produced by using the electroconductive separator and the MEA.
The fuel cell of Example 1 was maintained at 70°C, and a reformed gas having a hydrogen gas content of 80% and air, which had been heated and humidified to realize an anode-side dew point of 70°C and a cathode-side dew point of 70°C, were fed thereto, and the fuel cell was operated at a fuel gas utilization factor Uf of 75%, an oxidizing gas utilization factor Uo of 40% and a current density of 0 . 2 A/cm$^2$ for 24 hours. At this time, the gas containing liquid droplets discharged from the anode-side and cathode-side outlets was introduced into a trap tube cooled with ice water, so as to measure the water discharging amounts of the discharged gases on the anode side Ya and on the cathode side Yc. The water feeding amounts in the fed gases on the anode side Xa and on the cathode side Xc were previously measured before the test of the fuel cell in the same manner as in the measurement of the water discharging amounts

in the discharged gases.

The countercurrent flow rate Z was calculated by the following equation (8).

$$Z = (Ya - Xa)/((Ya - Xa) + (Yc - Xc)) \quad (8)$$

The results obtained are shown in Table 1 below.

[Table 1]

(continued)

| | Water content Xa in fed fuel gas (g/h/cell) | Water content Xc in fed oxidizing gas (g/h/cell) | Water content Ya in discharged fuel gas (g/h/cell) | Water content Yc in discharged oxidizing gas (g/h/cell) | Countercurrent flow rate Z | Difference in hydraulic pressure Ec-Ea (kPa) |
|---|---|---|---|---|---|---|
| Example 1 | 7.14 | 25.68 | 8.59 | 33.91 | 0.150 | 1.00 |
| Example 2 | 7.14 | 25.68 | 8.40 | 34.10 | 0.130 | 0.81 |
| Example 3 | 7.14 | 25.68 | 7.62 | 34.88 | 0.050 | 0.32 |
| Example 4 | 7.14 | 25.68 | 6.46 | 36.04 | -0.070 | -0.50 |
| Example 5 | 7.14 | 25.68 | 7.58 | 34.92 | 0.045 | 0.24 |
| Comparative Example 1 | 7.14 | 25.68 | 9.38 | 33.12 | 0.231 | 1.62 |
| Comparative Example 2 | 7.14 | 25.68 | 8.79 | 33.71 | 0.170 | 1.15 |
| Comparative Example 3 | 7.14 | 25.68 | 10.34 | 32.16 | 0.331 | 3.01 |
| Comparative Example 4 | 7.14 | 25.68 | 6.27 | 36.23 | -0.090 | -0.60 |
| Comparative Example 5 | 7.14 | 25.68 | 9.03 | 33.47 | 0.195 | 1.26 |
| Comparative Example 6 | 7.14 | 25.68 | 9.08 | 33.42 | 0.200 | 1.30 |
| Comparative Example 7 | 7.14 | 25.68 | 8.91 | 33.59 | 0.183 | 1.18 |

[Table 1]

(continued)

| | Electrolyte | Anode gas diffusion layer | | | Cathode gas diffusion layer | | |
|---|---|---|---|---|---|---|---|
| | Thickness (µm) | Substrate | PTFE amount in substrate ($mg/cm^2$) | PTFE amount in coated layer ($mg/cm^2$) | Substrate | PTFE amount in substrate ($mg/cm^2$) | PTFE amount in coated layer ($mg/cm^2$) |
| Example 1 | 30 | woven cloth | 1.0 | 0.8 | woven cloth | 1.0 | 0.4 |
| Example 2 | 30 | woven cloth | 1.0 | 0.8 | woven cloth | 1.5 | 0.8 |
| Example 3 | 30 | non-woven cloth | 1.0 | 0.8 | woven cloth | 1.0 | 0.8 |
| Example 4 | 46 | woven cloth | 1.0 | 0.8 | woven cloth | 1.0 | 0.4 |
| Example 5 | 30 | non-woven cloth | 1.0 | 0.8 | woven cloth | 1.0 | 0.8 |
| Comparative Example 1 | 30 | woven cloth | 1.0 | 0.4 | woven cloth | 1.0 | 0.8 |
| Comparative Example 2 | 30 | woven cloth | 1.5 | 0.8 | woven cloth | 1.0 | 0.8 |
| Comparative Example 3 | 30 | woven cloth | 1.0 | 0.8 | woven cloth | 1.0 | 0.8 |
| Comparative Example 4 | 46 | non-woven cloth | 1.0 | 0.8 | woven cloth | 1.0 | 0.4 |
| Comparative Example 5 | 30 | non-woven cloth | 1.0 | 0.8 | woven cloth | 1.0 | 0.8 |
| Comparative Example 6 | 30 | non-woven cloth | 1.0 | 0.8 | woven cloth | 1.0 | 0.8 |
| Comparative Example 7 | 30 | non-woven cloth | 1.0 | 0.8 | woven cloth | 1.0 | 0.8 |

[Table 1]

| | Separator shape (mm) | | | |
|---|---|---|---|---|
| | a (depth) | b1 (bottom width) | b2 (top width) | c (mound width) |
| Example 1 | 1.0 | 1.0 | 1.0 | 1.0 |
| Example 2 | 1.0 | 1.0 | 1.0 | 1.0 |
| Example 3 | 1.0 | 1.0 | 1.0 | 1.0 |
| Example 4 | 1.0 | 1.0 | 1.0 | 1.0 |
| Example 5 | 1.0 | 0.8 | 1.2 | 0.8 |
| Comparative Example 1 | 1.0 | 1.0 | 1.0 | 1.0 |
| Comparative Example 2 | 1.0 | 1.0 | 1.0 | 1.0 |
| Comparative Example 3 | 1.0 | 1.0 | 1.0 | 1.0 |
| Comparative Example 4 | 1.0 | 1.0 | 1.0 | 1.0 |
| Comparative Example 5 | 1.5 | 0.8 | 1.2 | 0.8 |
| Comparative Example 6 | 1.0 | 1.3 | 1.0 | 1.0 |
| Comparative Example 7 | 0.8 | 0.8 | 0.8 | 1.2 |

Furthermore, the difference in hydraulic pressure (Ec - Ea) , wherein Ea represents the hydraulic pressure between the anode gas diffusion layer and the hydrogen ion conductive electrolyte membrane, and Ec represents a hydraulic pressure between the cathode gas diffusion layer and the hydrogen ion conductive electrolyte membrane, was obtained based on the water migration amount from the cathode side to the anode side. The results obtained are shown in Table 1.

A test for fluctuation of the cathode-side oxidizing gas utilization factor (Uo) was then carried out. The fuel cell was operated with the value Uo increased stepwise from 20%, 30%, 40%, 50%, 60% to 70%, and the stability of voltage was evaluated. The operation time for the respective values of Uo was 3 hours. The results are shown in Fig. 4.

(Comparative Example 1)

A fuel cell having the same constitution as in Example 1 was produced except that the anode gas diffusion layer 13 had an amount of the water repellent resin (PTFE) of 0. 4 mg/cm$^2$ in the coated layer, and the cathode gas diffusion layer 12 had an amount of the water repellent resin (PTFE) of 0.8 mg/cm$^2$ in the coated layer, and then subjected to the same test as in Example 1. The results obtained are shown in Table 1 and Fig. 4.

It was understood from Fig. 4 that in the fuel cell of Comparative Example 1, the average voltage of the respective single cells disrupted stability to cause a flooding phenomenon when the Uo becomes 70% or more. In the fuel cell of Example 1, on the other hand, excellent voltage stability was exerted when the Uo becomes 70% in comparison to Comparative Example 1.

In Example 1, the amount of the water repellent resin in the coated layer of the anode gas diffusion layer was larger than that on the cathode side, and the withstand hydraulic pressure is smaller in the cathode gas diffusion layer. In Comparative Example 1, the withstand hydraulic pressure is smaller in the anode gas diffusion layer owing to the reverse structure.

It was confirmed from the above that significant flooding prevention effect was obtained when the withstand hydraulic pressure of the cathode gas diffusion layer was made smaller than the withstand hydraulic pressure of the anode gas diffusion layer.

(Example 2)

A fuel cell having the same constitution as in Example 1 was produced except that the anode gas diffusion layer 13 had an amount of the water repellent resin (PTFE) of 1.0 mg/cm$^2$ in the substrate and an amount of the water repellent resin (PTFE) of 0.8 mg/cm$^2$ in the coated layer, and the cathode gas diffusion layer 12 had an amount of the water repellent resin (PTFE) of 1. 5 mg/cm$^2$ in the substrate and an amount of the water repellent resin (PTFE) of 0.8 mg/cm$^2$ in the coated layer, and then subjected to the same test as in Example 1. The results obtained are shown in Table 1 and Fig. 5.

(Comparative Example 2)

A fuel cell having the same constitution as in Example 1 was produced except that the anode gas diffusion layer 13 had an amount of the water repellent resin (PTFE) of 1.5 mg/cm$^2$ in the substrate, and the cathode gas diffusion layer 12 had an amount of the water repellent resin (PTFE) of 1.0 mg/cm$^2$ in the substrate, and then subjected to the same test as in Example 1. The results obtained are shown in Table 1 and Fig. 5.

It was understood from Fig. 5 that in the fuel cell of Comparative Example 2, the average voltage of the respective single cells disrupted stability to cause a flooding phenomenon when the Uo becomes 70% or more. In the fuel cell of Example 2, on the other hand, excellent voltage stability was exerted when the Uo becomes 70% in comparison to Comparative Example 2.

In Example 2, the amount of the water repellent resin in the substrate of the cathode gas diffusion layer was larger than that on the anode side, and the drainage property was improved thereon to make the withstand hydraulic pressure smaller in the cathode gas diffusion layer. In Comparative Example 2, the withstand hydraulic pressure is smaller in the anode gas diffusion layer owing to the reverse structure.

It was confirmed from the above that significant flooding prevention effect was obtained when the withstand hydraulic pressure of the cathode gas diffusion layer was made smaller than the withstand hydraulic pressure of the anode gas dif fus ion layer.

(Example 3)

A fuel cell having the same constitution as in Example 1 was produced except that the anode gas diffusion layer 13 was produced with a carbon non-woven cloth (TGPH060, produced by Toray Corp.) , of which 80% or more of pores have a diameter of 14 to 29 μm, as a substrate and had an amount of the water repellent resin (PTFE) of 1.0 mg/cm$^2$ in the substrate and an amount of the water repellent resin (PTFE) of 0.8 mg/cm$^2$ in the coated layer, and the cathode gas diffusion layer 12 was produced with the same carbon woven cloth as in Example 1 and had an amount of the water repellent resin (PTFE) of 1.0 mg/cm$^2$ in the substrate and an amount of the water repellent resin (PTFE) of 0.8 mg/cm$^2$ in the coated layer, and then subjected to the same test as in Example 1. The results obtained are shown in Table 1 and Fig. 6.

(Comparative Example 3)

A fuel cell having the same constitution as in Example 3 was produced except that the anode gas diffusion layer 13 had the same constitution as that in Example 1, and then subj ected to the same test as in Example 1. The results obtained are shown in Table 1 and Fig. 6.

It was understood from Fig. 6 that in the fuel cell of Comparative Example 3, the average voltage of the respective single cells disrupted stability to cause a flooding phenomenon when the Uo becomes 70% or more. In the fuel cell of Example 3, on the other hand, excellent voltage stability was exerted when the Uo becomes 70% in comparison to Comparative Example 3.

In Example 3, the pore diameter of the substrate of the cathode gas diffusion layer was smaller than that on the anode side, and the withstand hydraulic pressure was smaller on the side of the cathode gas diffusion layer according to the equation (7). In Comparative Example 3, there was no difference in withstand hydraulic pressure between the anode side and the cathode side since the same gas diffusion layers were used on both sides.

It was confirmed from the above that significant flooding prevention effect was obtained when the withstand hydraulic pressure of the cathode gas diffusion layer was made smaller than the withstand hydraulic pressure of the anode gas diffusion layer.

(Example 4)

A fuel cell having the same constitution as in Example 1 was produced except that a Nafion membrane (produced by Du Pont Inc. , thickness: 46 μm) was used as the electrolyte membrane 11, and then subjected to the same test as in Example 1. The results obtained are shown in Table 1 and Fig. 7.

(Comparative Example 4)

A fuel cell having the same constitution as in Example 4 was produced except that the anode gas diffusion layer 13 was produced with the same carbon non-woven cloth as in Example 3 and had an amount of the water repellent resin (PTFE) of 1. 0 $mg/cm^2$ in the substrate and an amount of the water repellent resin (PTFE) of 0.8 $mg/cm^2$ in the coated layer, and then subj ected to the same test as in Example 1. The results obtained are shown in Table 1 and Fig. 7.

It was understood from Fig. 7 that in the fuel cell of Comparative Example 4, the average voltage of the respective single cells disrupted stability to cause a flooding phenomenon when the Uo becomes 60% or more. In the fuel cell of Example 4, on the other hand, excellent voltage stability was exerted when the Uo becomes 70% in comparison to Comparative Example 4.

In Example 4, the electrolyte membrane had a larger thickness than that in Example 1 to suppress the countercurrent flow rate. In Comparative Example 4, the countercurrent flow rate was further suppressed in comparison to Example 4 since a non-woven cloth increasing the withstand hydraulic pressure was used in the anode gas diffusion layer.

It was confirmed from the above that significant flooding prevention effect was obtained when the thickness of the electrolyte membrane was adjusted.

The negative value of the countercurrent flow rate means the relationship ((amount of water associated with protons P) > (amount of back diffusion water Q) ) . This was because the thickness of the proton polymer electrolyte membrane 11 was increased from 30 μm in Example 1 to 46 μm in Example 4, and therefore, the amount of the back diffusion water Q was decreased.

(Example 5)

Fig. 3B is a cross sectional view showing a gas feeding channel of an electroconductive separator plate used in Example 5 in a direction perpendicular to the gas flowing direction. In Fig. 3B, the depth a of the gas feeding channel was 1.0 mm, the bottom width b1 of the gas feeding channel was 0.8 mm, the top width b2 of the gas feeding channel was 1.2 mm, and the mound width c was 0.8 mm. A fuel cell having the same constitution as in Example 3 was produced except that the aforementioned separator plate was used, and then subjected to the same test as in Example 1. The results obtained are shown in Table 1 and Fig. 8.

(Comparative Example 5)

Fig. 3C is a cross sectional view showing a gas feeding channel of an electroconductive separator plate used in Comparative Example 5 in a direction perpendicular to the gas flowing direction. In Fig. 3C, the depth a of the gas feeding channel was 1.5 mm, the bottom width b1 of the gas feeding channel was 0.8 mm, the top width b2 of the gas feeding channel was 1.2 mm, and the mound width c was 0.8 mm. A fuel cell having the same constitution as in Example 5 was produced except that the aforementioned separator plate was used, and then subj ected to the same test as in Example 1. The results obtained are shown in Table 1 and Fig. 8.

(Comparative Example 6)

Fig. 3D is a cross sectional view showing a gas feeding channel of an electroconductive separator plate used in Comparative Example 6 in a direction perpendicular to the gas flowing direction. In Fig. 3D, the depth a of the gas feeding channel was 1.0 mm, the bottom width b1 of the gas feeding channel was 1.3 mm, the top width b2 of the gas feeding channel was 1.0 mm, and the mound width c was 1.0 mm. A fuel cell having the same constitution as in Example 5 was produced except that the aforementioned separator plate was used, and then subjected to the same test as in Example 1. The results obtained are shown in Table 1 and Fig. 8.

(Comparative Example 7)

Fig. 3E is a cross sectional view showing a gas feeding channel of an electroconductive separator plate used in Comparative Example 7 in a direction perpendicular to the gas flowing direction. In Fig. 3E, the depth a of the gas feeding channel was 0.8 mm, the bottom width b1 of the gas feeding channel was 0.8 mm, the top width b2 of the gas feeding channel was 0.8 mm, and the mound width c was 1.3 mm. A fuel cell having the same constitution as in Example 5 was produced except that the aforementioned separator plate was used, and then subjected to the same test as in

Example 1. The results obtained are shown in Table 1 and Fig. 8.

It was understood from Fig. 8 that the average voltage of the respective single cells disrupted stability to cause a flooding phenomenon when the Uo becomes 70% or more in Comparative Example 5, 60% or more in Comparative Example 6, and 70% or more in Comparative Example 7. In the fuel cells of Examples 3 and 5, on the other hand, excellent voltage stability was exerted when the Uo becomes 70% in comparison to Comparative Examples 5 to 7.

The depth a, the bottom width b1, the top width b2 and the mound width c of the gas feeding channel of the electroconductive separator plate in Examples 3 and 5 and Comparative Examples 5 to 7 had the following relationships.

Example 3: $a = b2$, $b1 = b2$, $c = b2$
Example 5: $a < b2$, $b1 < b2$, $c < b2$
Comparative Example 5: $a > b2$, $b1 < b2$, $c < b2$
Comparative Example 6: $a = b2$, $b1 > b2$, $c = b2$
Comparative Example 7: $a < b2$, $b1 < b2$, $c > b2$

In Examples 3 and 5 and Comparative Examples 5 to 7, a carbon woven cloth was used as the substrate of the cathode gas diffusion layer 12, and a carbon non-woven cloth was used as the substrate of the anode gas diffusion layer 13, whereby the withstand hydraulic pressure was smaller on the side of the cathode gas diffusion layer.

Accordingly, it was confirmed that significant flooding prevention effect was obtained when the gas feeding channel satisfying the condition of the equation (2) is used, and the withstand hydraulic pressure of the cathode gas diffusion layer is made smaller than the withstand hydraulic pressure of the anode gas diffusion layer.

$$a \leq b2 \text{ and } b1 \leq b2 \text{ and } c \leq b2 \qquad (2)$$

Furthermore, the comparison between Example 3 and Example 5 revealed that Example 5 exerted better stability. It was understood therefrom that the condition of the equation (2) conspicuously exerted the voltage stability.

As having been described hereinabove, it was understood from Examples 1 to 5, Comparative Examples 1 to 7 and Figs. 4 to 8 that significant flooding prevention effect was obtained when at least one of the pore diameter and the content of the water repellent agent of the anode gas diffusion layer and the cathode gas diffusion layer, the thickness of the electrolyte membrane, and the shape of the gas flow channel of the separator were adjusted in such a manner that the countercurrent flow rate Z satisfied the equation (1) or the difference in hydraulic pressure applied to the electrolyte membrane satisfied the equation (3).

$$-0.07 \leq (Ya-Xa) / ((Ya-Xa) + (Yc-Xc)) \leq 0.15 \qquad (1)$$

$$-0.50 \text{ kPa} \leq (Ec - Ea) \leq 1.00 \text{ kPa} \qquad (3)$$

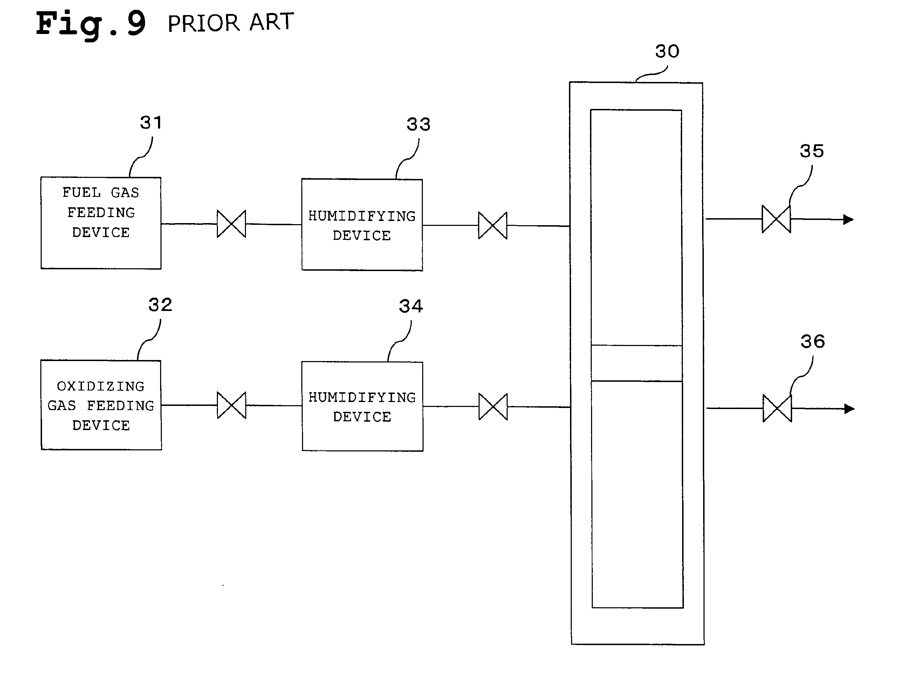

Fig. 9 is a constitutional diagram showing an example of a fuel cell system according to the invention, in which numeral 30 denotes the aforementioned fuel cell. A fuel gas feeding device 31 feeds a fuel gas to the fuel cell 30, and an oxidizing gas feeding device 32 feeds an oxidizing gas thereto. The fuel gas and the oxidizing gas each is humidified by humidifying devices 33 and 34. Numerals 35 and 36 denote an exhaust valve for the fuel gas and an exhaust valve for the oxidizing gas, respectively.

The fuel gas and/or the oxidizing gas are humidified to satisfy the equation (1) by the humidifying devices 33 and 34.

In alternative, the fuel gas and/or the oxidizing gas are humidified to satisfy the equation (3) by the humidifying devices 33 and 34.

The invention is not limited to the specific embodiments in the aforementioned Examples, such as the depth, the bottom width, the top width and the mound width of the gas feeding channel, the substrate of the gas diffusion layer and the thickness of the electrolyte membrane, and various kinds of materials for the gas diffusion layer and the electrolyte membrane may be used that as long as they can replace them in view of the scope and the spirit of the invention.

Furthermore, while polymer electrolyte type fuel cells are exemplified in the aforementioned Examples, the invention exerts significant effect upon applying to any kind of fuel cells and systems controlling fuel cells in that water is formed as a reaction product on the cathode side through an electrochemical reaction upon power generation of the cells.

The fuel cell according to the invention has such an effect that flooding is suppressed from occurring to realize a stable output voltage, and is useful as a fuel cell used in a household co-generation system, a motorcycle, an electric automobile and a hybrid electric automobile. The fuel cell is excellent in output voltage stability even under low power

operation and low flow rates of feeding gases.

## Claims

1. A fuel cell comprising an electrolyte membrane, a pair of anode-side and cathode-side catalyst layers being disposed on both sides of the electrolyte membrane, a pair of an anode gas diffusion layer and a cathode gas diffusion layer being disposed to hold the pair of catalyst layers from outside, an anode-side separator having fuel gas flow channels for feeding and discharging a fuel gas containing hydrogen to the anode gas diffusion layer, and a cathode-side separator having oxidizing gas flow channels for feeding and discharging an oxidizing gas to the cathode gas diffusion layer, the anode-side separator and the cathode-side separator being disposed to hold the pair of diffusion layers,

   the anode gas diffusion layer and the cathode gas diffusion layer being adjusted in such a manner that at least one of a fine pore diameter and a content of a water repellent agent satisfies the following equation (1):

$$-0.07 \leq (Ya\text{-}Xa) / ((Ya\text{-}Xa) + (Yc\text{-}Xc)) \leq 0.15 \quad (1)$$

   wherein Xa represents a water feeding amount in the fuel gas thus fed, Ya represents a water discharging amount in the discharged fuel gas, Xc represents a water feeding amount in the oxidizing gas thus fed, and Yc represents a water discharging amount in the discharged oxidizing gas.

2. The fuel cell as claimed in claim 1, wherein the electrolyte membrane is adjusted in thickness to satisfy the equation (1).

3. The fuel cell as claimed in claim 1 or 2, wherein the gas flow channels of the anode-side separator and the gas flow channels of the cathode-side separator have structures that are adjusted to satisfy the following equation (2):

$$a \leq b2 \text{ and } b1 \leq b2 \text{ and } c \leq b2 \quad (2)$$

   wherein "a" represents a groove depth of the gas flow channels, "b1" represents a bottom width of the groove of the gas flow channels, "b2" represents a top width of the groove of the gas flow channels, and "c" represents a width of a mound between the plural gas flow channels.

4. A fuel cell comprising an electrolyte membrane, a pair of anode-side and cathode-side catalyst layers being disposed on both sides of the electrolyte membrane, a pair of an anode gas diffusion layer and a cathode gas diffusion layer being disposed to hold the pair of catalyst layers from outside, an anode-side separator having fuel gas flow channels for feeding and discharging a fuel gas containing hydrogen to the anode gas diffusion layer, and a cathode-side separator having oxidizing gas flow channels for feeding and discharging an oxidizing gas to the cathode gas diffusion layer, the anode-s ide separator and the cathode-side separator being disposed to hold the pair of diffusion layers,

   the anode gas diffusion layer and the cathode gas diffusion layer being adjusted in such a manner that at least one of a fine pore diameter and a content of a water repellent agent satisfies the following equation (3):

$$-0.50 \text{ kPa} \leq (Ec - Ea) \leq 1.00 \text{ kPa} \quad (3)$$

   wherein Ea represents a hydraulic pressure between the anode gas diffusion layer and the electrolyte membrane, and Ec represents a hydraulic pressure between the cathode gas diffusion layer and the electrolyte membrane.

5. A fuel cell system comprising a fuel gas feeding device for feeding a fuel gas, an oxidizing gas feeding device for feeding an oxidizing gas, and the fuel cell as claimed in claim 1, the fuel gas and/or the oxidizing gas being humidified to satisfy the equation (1).

6. A fuel cell system comprising a fuel gas feeding device for feeding a fuel gas, an oxidizing gas feeding device for feeding an oxidizing gas, and the fuel cell as claimed in claim 4, the fuel gas and/or the oxidizing gas being humidified to satisfy the equation (3).

Fig.1

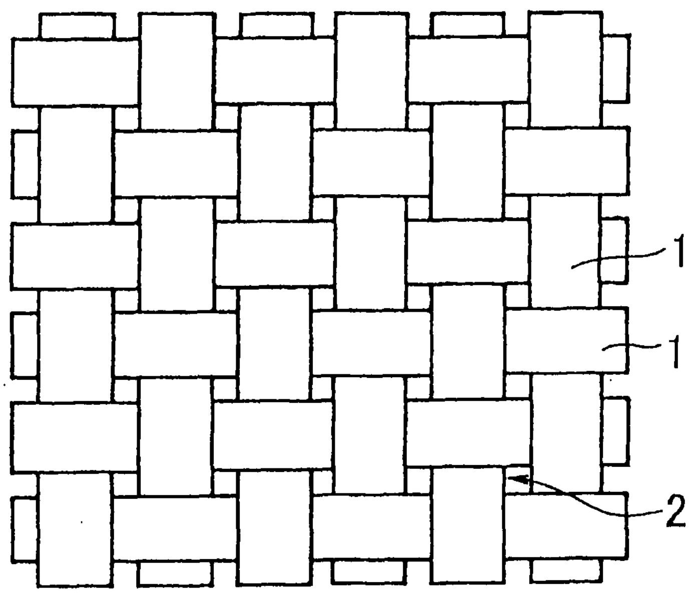

Fig.2 A

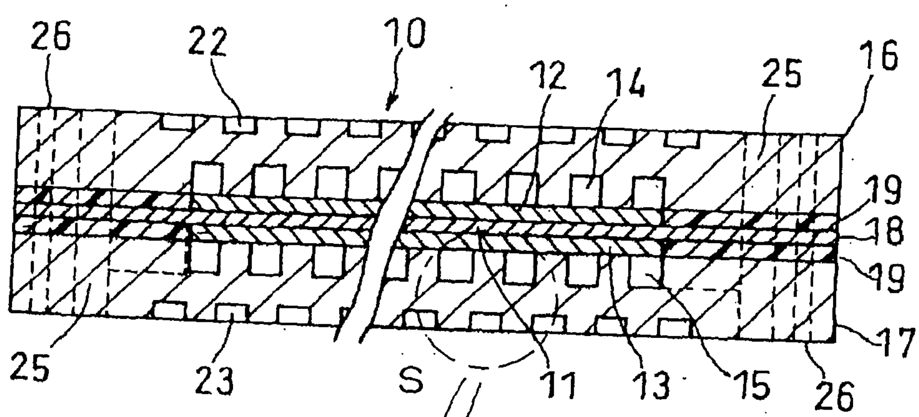


Fig.2 B

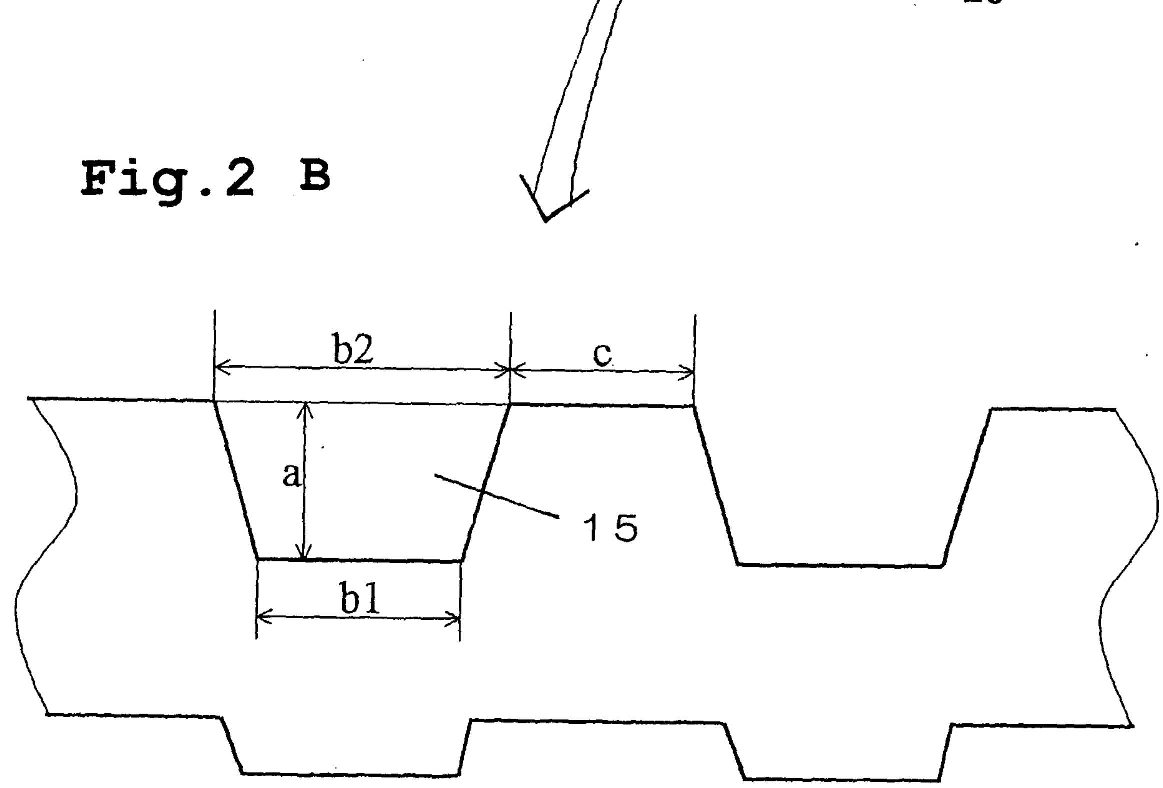

Fig.3 A

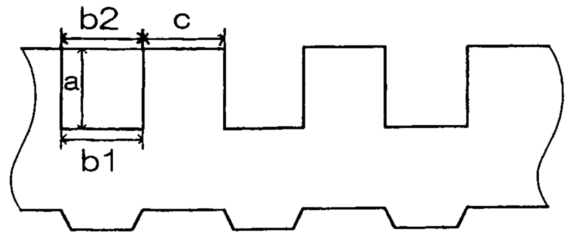


Fig.3 B

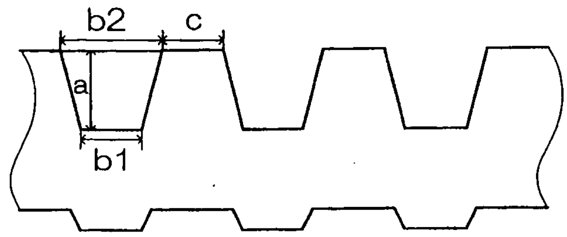


Fig.3 C

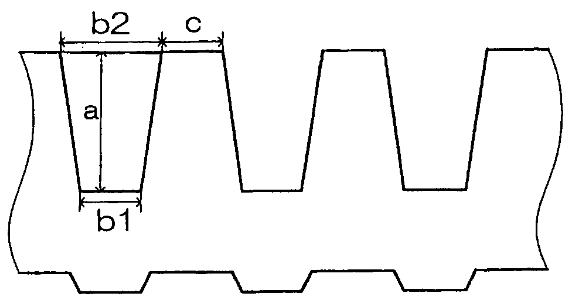


Fig.3 D

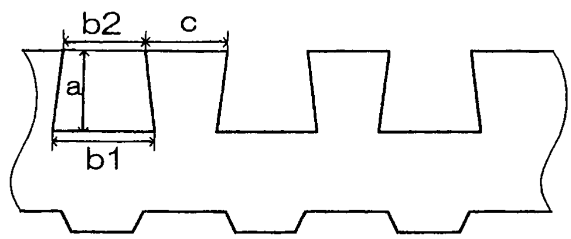


Fig.3 E

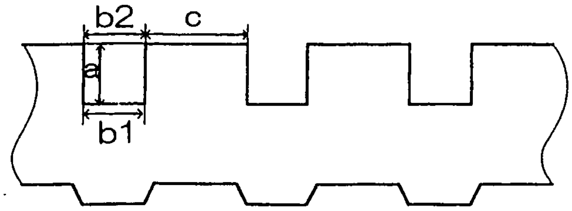

# Fig.4

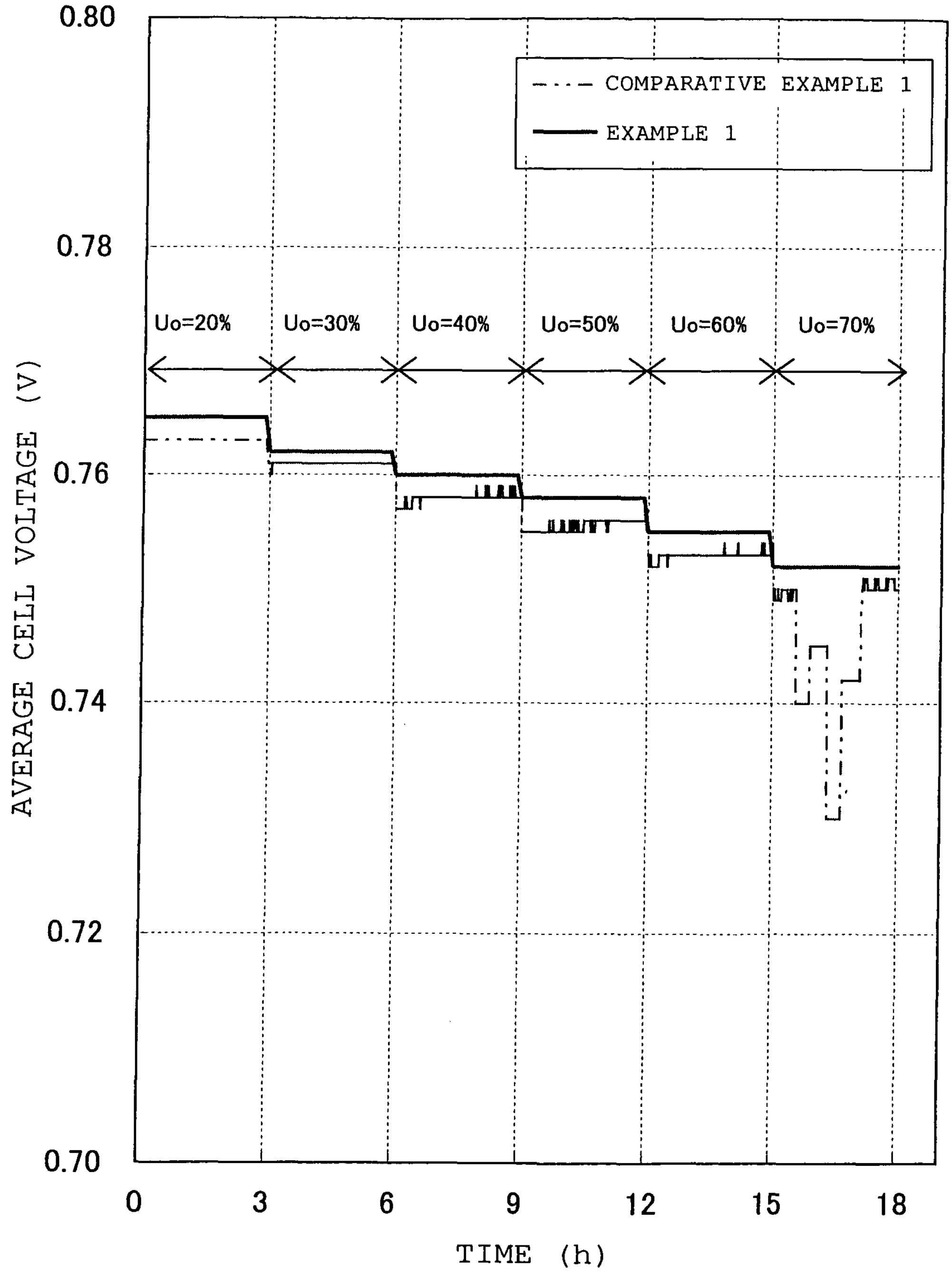
0.80
0.78
0.76
0.74
0.72
0.70
AVERAGE CELL VOLTAGE (V)
COMPARATIVE EXAMPLE 1
EXAMPLE 1
Uo=20%
Uo=30%
Uo=40%
Uo=50%
Uo=60%
Uo=70%
0
3
6
9
12
15
18
TIME (h)

Fig.5

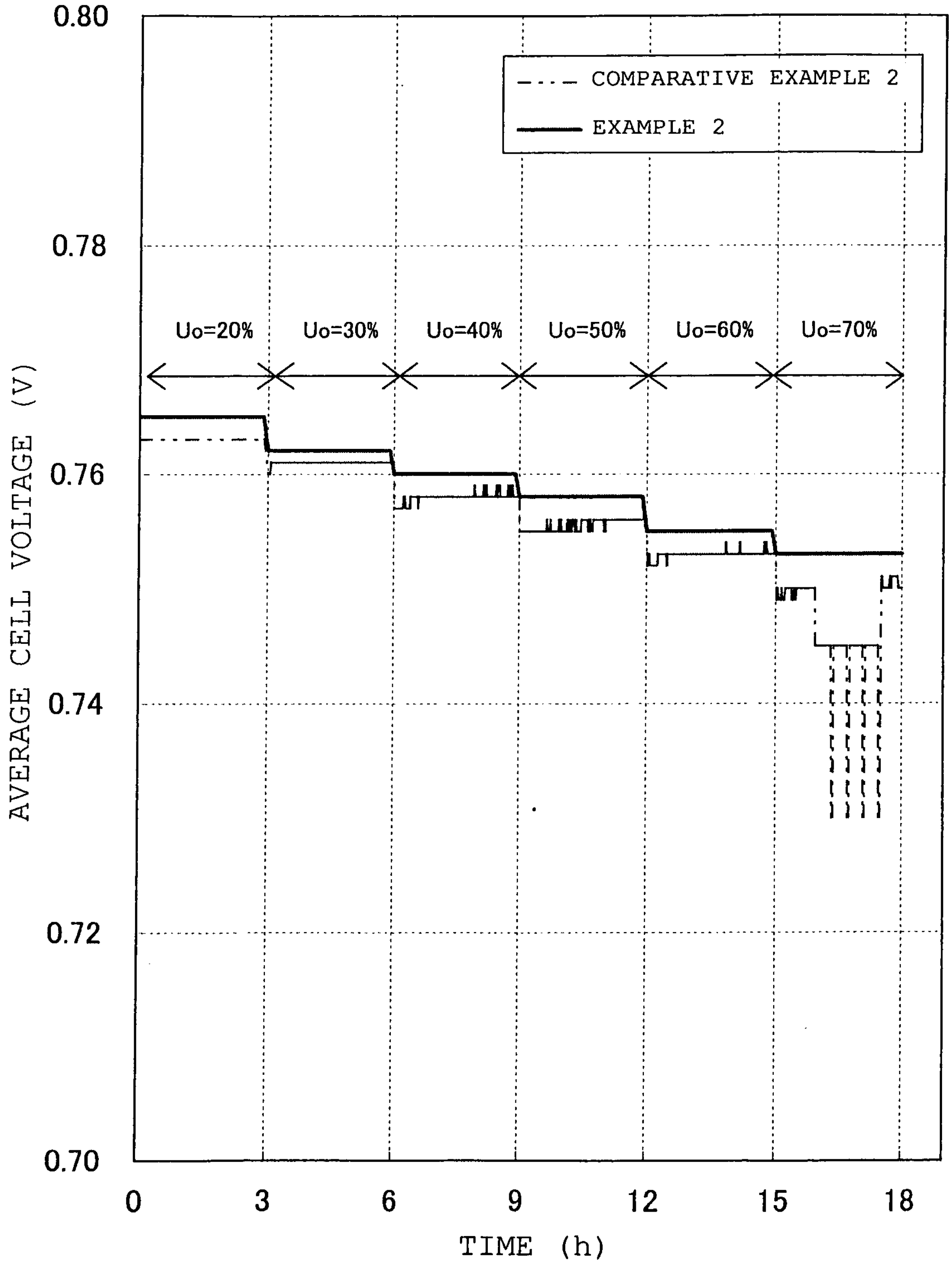
0.80
0.78
0.76
0.74
0.72
0.70
AVERAGE CELL VOLTAGE (V)
COMPARATIVE EXAMPLE 2
EXAMPLE 2
Uo=20%
Uo=30%
Uo=40%
Uo=50%
Uo=60%
Uo=70%
0
3
6
9
12
15
18
TIME (h)

# Fig.6

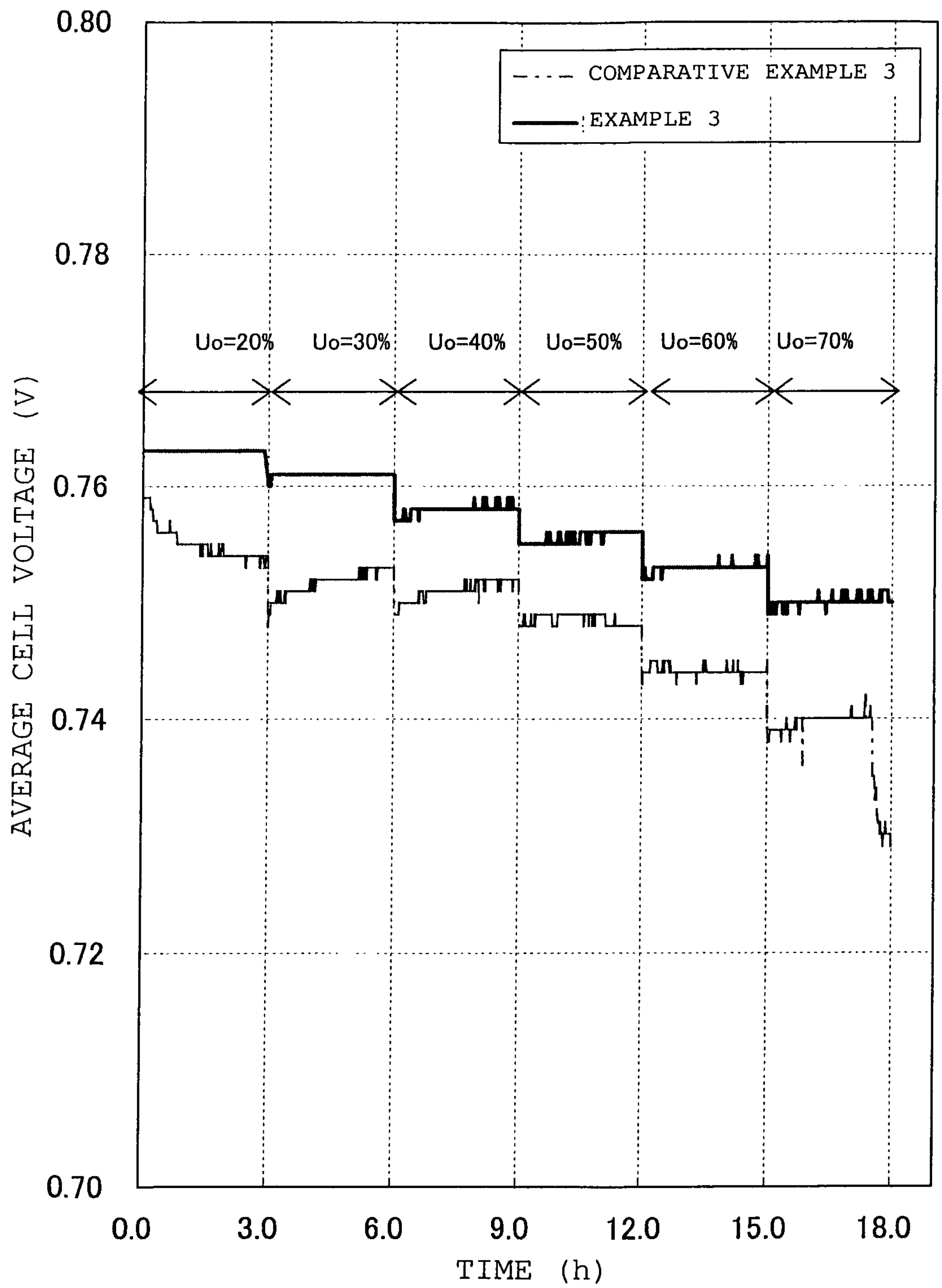
COMPARATIVE EXAMPLE 3
EXAMPLE 3
Uo=20%
Uo=30%
Uo=40%
Uo=50%
Uo=60%
Uo=70%
AVERAGE CELL VOLTAGE (V)
0.80
0.78
0.76
0.74
0.72
0.70
0.0
3.0
6.0
9.0
12.0
15.0
18.0
TIME (h)

Fig. 7

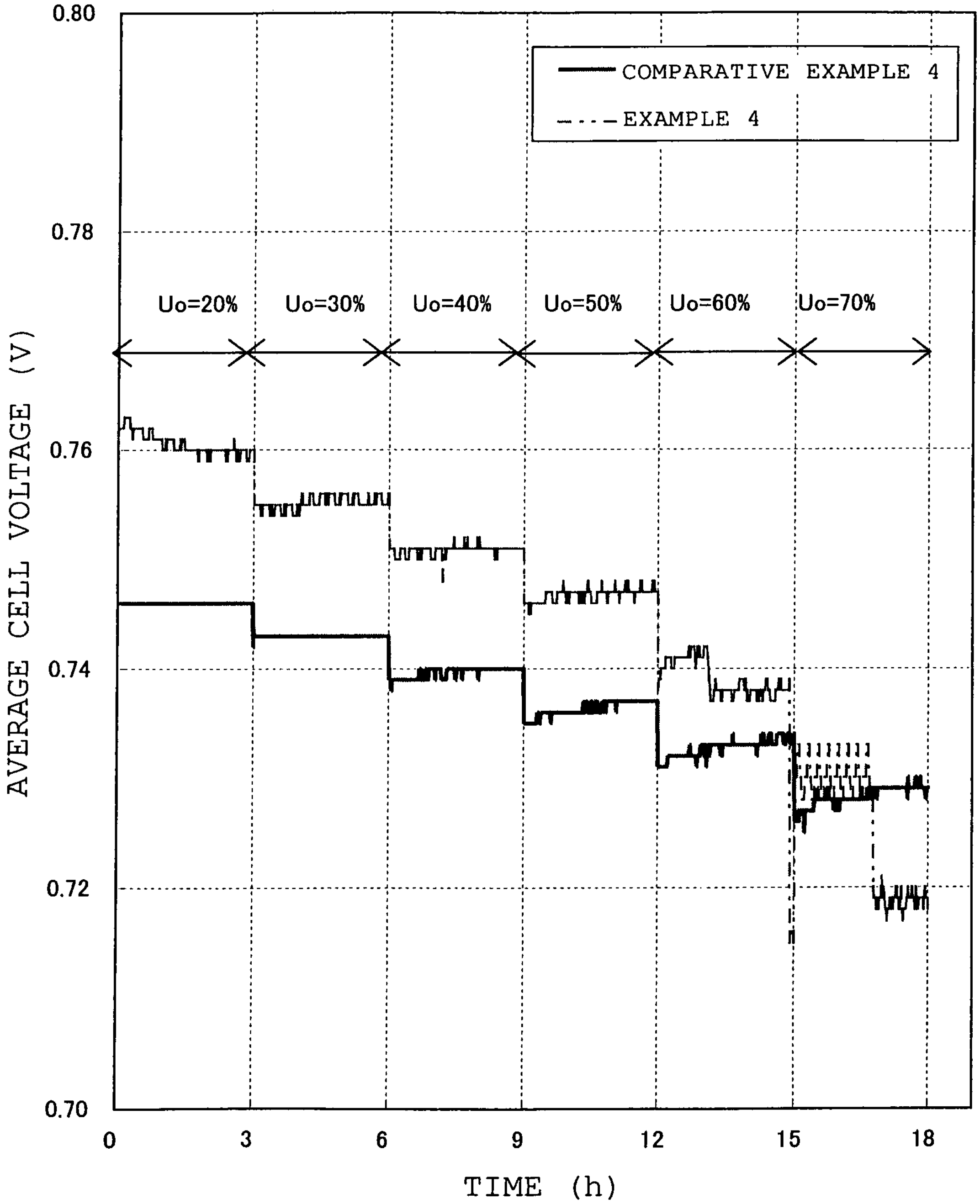
COMPARATIVE EXAMPLE 4
EXAMPLE 4
Uo=20%
Uo=30%
Uo=40%
Uo=50%
Uo=60%
Uo=70%
0.80
0.78
0.76
0.74
0.72
0.70
AVERAGE CELL VOLTAGE (V)
0
3
6
9
12
15
18
TIME (h)

Fig.8

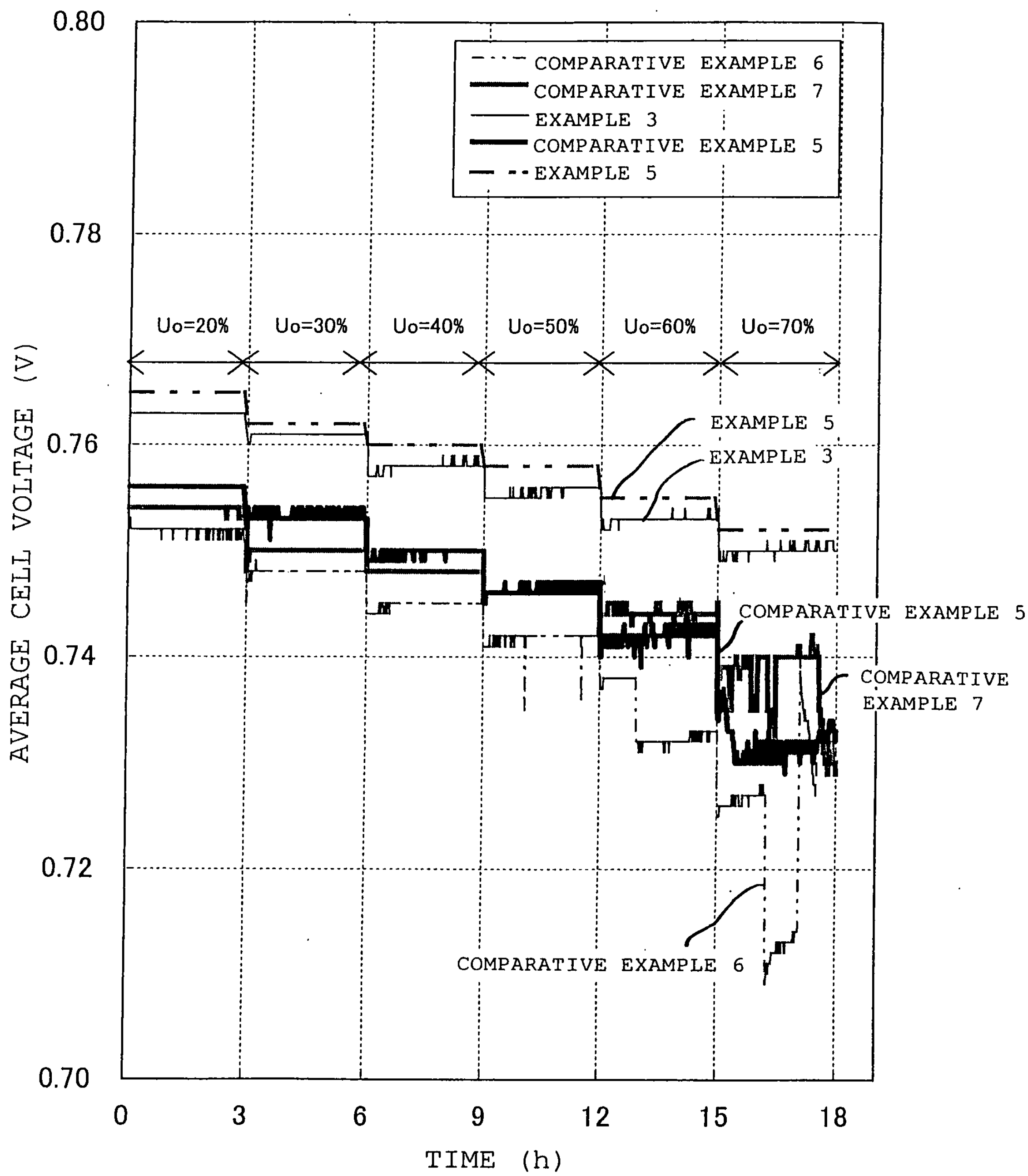
COMPARATIVE EXAMPLE 6
COMPARATIVE EXAMPLE 7
EXAMPLE 3
COMPARATIVE EXAMPLE 5
EXAMPLE 5
0.80
0.78
0.76
0.74
0.72
0.70
AVERAGE CELL VOLTAGE (V)
Uo=20%
Uo=30%
Uo=40%
Uo=50%
Uo=60%
Uo=70%
EXAMPLE 5
EXAMPLE 3
COMPARATIVE EXAMPLE 5
COMPARATIVE EXAMPLE 7
COMPARATIVE EXAMPLE 6
0
3
6
9
12
15
18
TIME (h)

**Fig.9** PRIOR ART